# FASCICULE DE BREVET EUROPEEN

(11) **EP 2 212 545 B1**
(45) Date de publication et mention de la délivrance du brevet: **07.11.2018**
(21) Numéro de dépôt: 08848802.8
(22) Date de dépôt: 31.10.2008
(51) Int. Cl.: F02N 11/08

(54) **SECURITE SUR RELACHEMENT DE PEDALE POUR UN VEHICULE EQUIPE D'UN SYSTEME D'ARRET/RELANCE DU MOTEUR**
SICHERHEITSSYSTEM ZUR PEDALFREIGABE FÜR EIN FAHRZEUG MIT STOPP/START-SYSTEM
PEDAL RELEASE SAFETY SYSTEM FOR A VEHICLE PROVIDED WITH AN ENGINE STOP/RESTART SYSTEM

(30) Priorité: 12.11.2007 FR 0758957
(43) Date de publication de la demande: 04.08.2010
(73) Titulaire: Valeo Equipements Electriques Moteur, 94046 Créteil Cedex (FR)
(72) Inventeur: TASPINAR, Ertugrul, F-94370 Sucy-en-Brie (FR); GAREIL, Benoit, F-62360 Saint-Léonard (FR); MANDION, Thierry, F-77430 Champagne sur Seine (FR); LECOLE, Brice, F-75012 Paris (FR)
(86) Numéro de dépôt international: PCT/FR2008/051968
(87) Numéro de publication internationale: WO 2009/063152

(56) Documents cités:
- DE-C1- 10 211 461
- FR-A- 2 875 556
- US-A1- 2005 131 622

## Description

La présente invention se rapporte au domaine automobile, et concerne plus particulièrement les véhicules équipés d'un système d'arrêt/relance du moteur.

De manière connue, un système d'arrêt/relance du moteur d'un véhicule automobile comporte une machine électrique tournante réversible de type alterno-démarreur couplée à un convertisseur alternatif/continu réversible, l'ensemble étant commandé par une unité électronique dédiée reliée par ailleurs à l'unité électronique centrale de commande et de contrôle du moteur du véhicule.

Aussi longtemps que le moteur n'est pas à l'arrêt, la machine électrique tournante fonctionne en mode alternateur dans lequel elle permet, via le convertisseur alternatif/continu réversible précité, d'alimenter la batterie du véhicule et/ou toute autre unité de stockage d'énergie par une tension continue redressée.

Lorsque le moteur doit être relancé par le système d'arrêt/relance via l'unité électronique dédiée de celui-ci sur la base de conditions prédéfinies (vitesse de rotation du moteur, appui sur la pédale de frein ou d'embrayage du véhicule, ...), la machine électrique tournante réversible fonctionne en mode démarreur dans lequel elle alimente le moteur avec les tensions triphasées générées par le convertisseur alternatif/continu précité alimenté par la batterie du véhicule et/ou par l'unité de stockage d'énergie mentionnée ci-dessus.

Les conditions de relance du moteur sont définies, en particulier, par l'état de capteurs associés aux différentes pédales du véhicule concomitamment à un ensemble d'autres paramètres représentatifs de l'état du moteur et du véhicule. Par exemple, et de manière non limitative, un ensemble de capteurs équipe au moins les pédales d'embrayage et de frein, ainsi que le levier de changement de vitesse. Ces capteurs, qu'il s'agisse de capteurs de position, de capteurs de fin de course, ou de capteurs d'effort (pour le levier de changement de vitesse), fournissent à l'unité électronique de commande du système d'arrêt-relance du moteur des informations concernant l'état du dispositif concerné (pédale pressée ou relâchée, position du levier de changement de vitesse, action récente sur ce dernier, etc....). Sur la base de ces informations d'état, et par comparaison et échange de données avec l'unité électronique centrale de contrôle et de gestion du moteur, l'unité électronique du système d'arrêt/relance commande ou non le fonctionnement de la machine électrique tournante en mode démarreur, permettant ou non la relance du moteur. Dans la pratique, une condition importante déterminant une éventuelle relance du moteur est que le conducteur relâche la pédale d'embrayage ou de la pédale de frein, l'une de celles-ci au moins étant pressée dans la situation d'arrêt du moteur commandé par le système d'arrêt/relance.

Ainsi par le document FR2875556, il est connu un procédé pour arrêter et démarrer un moteur thermique dans un véhicule automobile, à l'aide d'une machine électrique tournante. Le procédé comporte les étapes d'arrêter le moteur thermique, de maintenir un courant d'excitation dans la machine électrique tournante pendant une période prédéterminée à partir de l'arrêt du moteur thermique, de couper le courant d'excitation dans la machine électrique tournante après cette période prédéterminée et en l'absence d'une commande de démarrage du moteur thermique, et de commander la machine électrique tournante pour provoquer le démarrage du moteur thermique. Une anticipation sur l'ordre de démarrage est effectuée de manière à commander une application précoce du courant d'excitation lors du démarrage du moteur thermique. Cette anticipation sur l'ordre de démarrage est obtenue avec l'aide de capteurs de début et de fin de course qui équipent la pédale d'embrayage ou la pédale d'accélération.

Le document US2005131622 a trait au redémarrage d'un moteur à partir d'une position enfoncée de la pédale de frein. Le moteur est redémarré lorsque la pédale est relâchée et que le gradient de pression est au-dessus d'un certain seuil.

Lorsqu'un système d'arrêt/relance du moteur équipe un véhicule doté d'une boîte de vitesses automatique ou robotisée, les paramètres définissant les conditions d'arrêt, et, surtout, de relance du moteur sont bien maîtrisés par l'ensemble des dispositifs de gestion des commandes du moteur et de la boîte de vitesses.

En revanche, la mise en oeuvre d'un tel système d'arrêt/relance sur un véhicule muni d'une boîte de vitesses manuelle peut s'avérer plus délicate, en particulier en termes de mise en place d'une stratégie reproductible et fiable de relance du moteur. En effet, les conducteurs ayant des habitudes de conduite différentes, les informations d'état combinées fournies par les capteurs équipant les pédales et/ou le levier de changement de vitesse peuvent, dans certains cas, s'avérer délicates à interpréter.

Un autre problème posé dans le cadre d'une telle mise en oeuvre, et auquel la présente invention vise à apporter une solution, est celui de la stratégie que le système doit adopter dans le cas où, moteur arrêté par le système d'arrêt/relance et pédale de frein ou d'embrayage pressée, la pédale d'embrayage ou de frein est brusquement accidentellement relâchée, par exemple suite à un glissement du pied du conducteur. En effet, un tel relâchement intempestif peut conduire le système d'arrêt/relance à amorcer une relance du moteur, relance qui, si une vitesse a été préalablement engagée par le conducteur (situation dans laquelle le véhicule est en attente devant un feu tricolore, par exemple), se traduira par une avancée du véhicule sur une courte distance, distance qui peut toutefois s'avérer suffisante pour être à l'origine d'un incident de circulation.

La présente invention a pour but de proposer une stratégie permettant d'éviter la relance du moteur en cas du relâchement intempestif de la pédale de frein ou de la pédale d'embrayage lorsque ledit moteur est à l'arrêt commandé par le système d'arrêt/relance du véhicule et l'une et/ou l'autre de ces pédales pressée.

Pour ce faire, la présente invention a pour objet un procédé et un système tels que définis dans les revendications annexées.

Selon une caractéristique de l'invention, le capteur équipant la pédale considérée envoie à l'unité électronique de gestion du système d'arrêt/relance deux informations de position de ladite pédale lors de sa course de relâchement de sa position extrême pressée à sa position extrême relâchée, correspondant respectivement à une première et à une seconde position distinctes l'une de l'autre. Un module de traitement spécifique, inclus dans l'unité électronique de commande du système d'arrêt/relance, calcule alors le laps de temps écoulé entre la réception de la première et de la seconde informations de position, et compare ensuite ce laps de temps à un laps de temps prédéfini correspondant au laps de temps moyen de passage, dans des conditions courantes de conduite, de l'une à l'autre desdites positions.

Si le laps de temps mesuré entre les deux passages par les deux positions précitées de la pédale est supérieur au laps de temps prédéfini précité, on peut considérer que le relâchement de pédale n'est pas accidentel, et l'unité électronique de gestion du système d'arrêt/relance du moteur analyse peut alors commander, après échange d'informations d'état du moteur avec l'unité électronique centrale de contrôle et de gestion de celui-ci, la relance dudit moteur.

Si, en revanche, le laps de temps écoulé entre les passages par les deux positions prédéterminées de la pédale est inférieur au laps de temps prédéfini précité, le relâchement de pédale est considéré comme intempestif, et l'unité électronique de gestion du système d'arrêt/relance peut alors interdire alors toute relance du moteur du véhicule.

Selon différents modes de réalisation de l'invention, liés à la nature et au nombre des capteurs placés sur les pédales d'embrayage et de frein, lesdites première et seconde positions peuvent être choisies de différentes manières.

Ainsi, selon un mode particulier de réalisation de l'invention, ces positions peuvent être des positions quelconques prédéfinies entre les deux positions extrêmes de ladite pédale dans sa course : dans ce cas, le capteur utilisé sera préférentiellement un capteur permettant d'établir à tout instant la position de ladite pédale, ou un capteur à deux seuils distincts réglables.

Selon un autre mode de réalisation de l'invention, l'une des deux positions distinctes peut être la position extrême pressée ou relâchée de la pédale. Dans ce cas, un capteur à seuil peut être associé à un capteur de fin de course de la pédale.

Selon une autre variante de réalisation de l'invention, la première position étant la position extrême pressée de la pédale, la seconde position de ladite pédale peut être la position extrême relâchée de celle-ci. Dans ce dernier cas, de simples capteurs de fin de course sont nécessaires à la mise en oeuvre du procédé selon l'invention.

L'invention permet ainsi, par la détermination des conditions de déroulement du relâchement de la pédale d'embrayage ou de la pédale de frein du véhicule lorsque le moteur est à l'arrêt commandé par le système d'arrêt/relance, d'interdire la relance du moteur en cas de relâchement accidentel de l'une de ces pédales, et, ainsi, d'accroître la sécurité du système d'arrêt/relance du moteur dudit véhicule, notamment dans le cas où celui-ci est équipé d'une boîte de vitesses manuelle.

D'autres caractéristiques et avantages de l'invention ressortiront à la lecture de la description qui suit d'un de ses modes de réalisation, illustrée par :
- la figure 1, qui est une vue schématique des différents éléments d'un système d'arrêt/relance du moteur d'un véhicule automobile,
- la figure 2, qui est une courbe présentant schématiquement la course typique d'une pédale de frein ou d'embrayage en fonction du temps lors d'un relâchement intentionnel,
- et la figure 3, qui est un diagramme détaillant les différentes étapes du procédé selon l'invention.

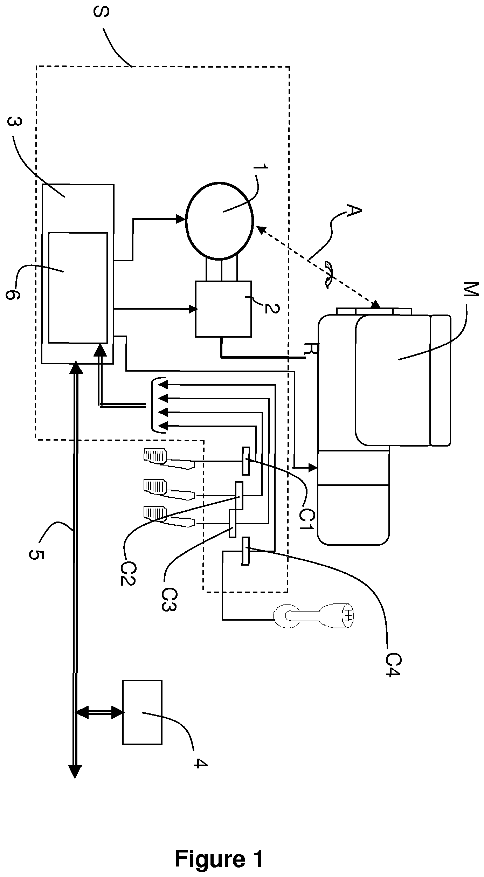

Ainsi que le montre la figure 1, un système d'arrêt/relance S du moteur thermique M d'un véhicule automobile comporte classiquement une machine électrique tournante réversible 1 liée au moteur M par un arbre A (représenté schématiquement sur la figure 1 par une double flèche en trait discontinu), un convertisseur alternatif/continu réversible 2, et une unité électronique de commande 3. L'unité électronique de commande 3 échange des informations avec l'unité centrale de gestion et de contrôle du moteur 4 à laquelle elle est reliée par des moyens de communication connus, représentés par la double flèche 5 sur la figure 1.

Aussi longtemps que le moteur M du véhicule n'est pas à l'arrêt, l'unité électronique 3 commande le fonctionnement de la machine électrique tournante réversible 1 en mode alternateur : celle-ci génère alors des tensions triphasées qui sont converties par le convertisseur alternatif/continu réversible 2 en une tension continue redressée apte à alimenter un réseau R d'équipements électriques de bord du véhicule comprenant par exemple la batterie au plomb du véhicule et/ou une unité de stockage d'énergie (non représentées sur la figure 1).

Lorsque le système d'arrêt/relance du moteur a déclenché un arrêt et que ledit moteur à l'arrêt doit être relancé, l'unité électronique 3 commande le fonctionnement de la machine électrique tournante réversible 1 en mode démarreur : celle-ci est alors alimentée par des tensions triphasées générées grâce au convertisseur alternatif/continu réversible 2 par exemple à partir de la batterie au plomb du véhicule ou à partir de l'unité de stockage d'énergie précitée.

La relance du moteur est, de manière connue, commandée par l'unité électronique 3 sur la base combinée d'informations reçues de l'unité centrale de contrôle et de gestion du moteur 4 et d'informations envoyées par un ensemble de capteurs Cn placés sur les pédales d'embrayage, de frein, et/ou d'accélération du véhicule, et/ou associés au levier de changement de vitesse. Dans l'exemple de réalisation présenté par la figure 1, des capteurs C1, C2, C3 sont ainsi respectivement associés aux pédales d'embrayage, de frein, et d'accélération, et un capteur C4 est associé au levier de changement de vitesse. Une relance du moteur M sera alors généralement demandée à l'unité électronique 3 et à l'unité centrale de gestion et de contrôle du moteur 4 lorsque, par exemple, alors que le moteur est arrêté et que la pédale de frein et/ou la pédale d'embrayage est(sont) pressée(s), le capteur correspondant à l'une de ces pédales enregistre une course de ladite pédale de sa position pressée vers sa position relâchée, course correspondant à un relâchement de ladite pédale.

Ainsi qu'il a été précisé plus haut, il convient alors, pour une sécurité optimale du fonctionnement du système d'arrêt/relance, de distinguer les relâchements de pédale réalisés dans le but d'une relance du moteur des relâchements de pédale accidentels, résultant par exemple d'un glissement du pied du conducteur.

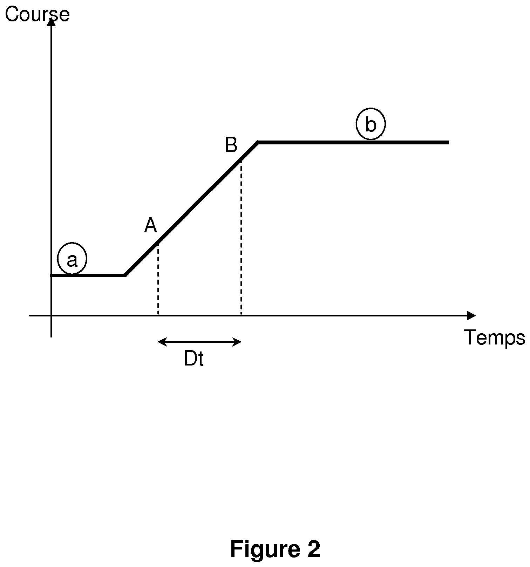

Selon l'invention, et ainsi que l'illustre plus précisément la figure 2 pour un mode de réalisation particulier de l'invention, la position de la pédale d'embrayage et/ou de la pédale de frein est repérée en deux points distincts (points A et B sur la courbe présentée par la figure 2) de la course de ladite pédale entre sa position pressée (repérée par la lettre "a" cerclée sur la figure 2) et sa position relâchée (repérée par la lettre "b" cerclée sur la figure 2). Ces informations fournies par les capteurs C1 et/ou C2 sont transmises à un module de traitement électronique approprié 6 intégré à l'unité de commande 3 qui mémorise les instants de passage t1 et t2 respectivement par les positions précitées. Le module de traitement 6 calcule alors le laps de temps Dt écoulé entre l'instant t1 de passage de la pédale correspondante par la position repérée par le point A (position A) et l'instant t2 de passage de ladite pédale par la position repérée par le point B (position B).

Si la durée mesurée Dt est supérieure à une valeur prédéfinie T correspondant au temps de passage de la pédale de la position A à la position B lors d'un relâchement de pédale considéré comme intentionnel, le relâchement de pédale est validé pour une relance du moteur. L'unité électronique de commande 3 peut alors, sur la base de l'information de relâchement de la pédale et d'informations complémentaires fournies par l'unité centrale de contrôle et de gestion du moteur, déclencher la relance demandée.

En revanche, si la durée mesurée Dt est inférieure à la valeur prédéfinie T précitée, le relâchement de pédale est considéré comme accidentel et n'est pas validé pour la commande d'une relance du moteur. Deux stratégies peuvent alors être mises en place : selon une première stratégie, l'unité électronique de commande 3 interdit toute relance du moteur, ou, selon une autre stratégie, la relance du moteur ne peut être validée que par la communication, par l'unité centrale de contrôle et de gestion du moteur 4, d'informations précises prédéterminées.

Il est à noter que, ainsi qu'il a été mentionné plus haut, selon différents modes de réalisation de l'invention, la position repérée par le point A peut être la position extrême pressée de la pédale considérée, et/ou la position repérée par le point B peut être la position extrême relâchée de ladite pédale.

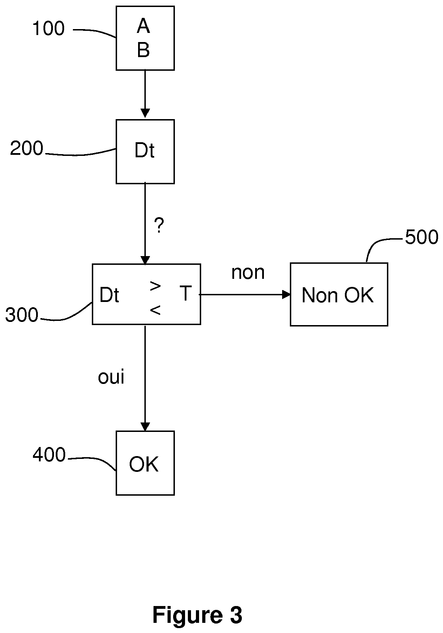

Les différentes étapes du procédé selon l'invention qui vient d'être décrit sont synthétisées sous forme d'un organigramme présenté par la figure 3.

Dans une première étape 100, le passage de la pédale d'embrayage ou de la pédale de frein par les positions distinctes A et B est relevé. Le module de traitement électronique 6 de l'unité de commande 3 calcule alors la durée de passage de la position A à la position B, soit Dt (étape 200). Dans l'étape 300, le module de traitement électronique 6 compare la durée Dt à une durée T prédéfinie correspondant au temps de passage de la pédale d'embrayage ou de la pédale de frein de la position A à la position B lors d'un relâchement de ladite pédale considéré comme intentionnel de la part du conducteur. Si la durée Dt est supérieure à la durée T (étape 400), le relâchement de pédale est validé pour une relance du moteur. Dans le cas contraire (étape 500), le relâchement de pédale est considéré comme intempestif et, selon le mode de réalisation de l'invention schématisé à la figure 3, l'unité électronique de commande 3 interdit toute relance du moteur.

L'invention permet donc de disposer d'un moyen simple et rapide de détection d'un relâchement intempestif d'une pédale de frein et/ou d'embrayage pressée lorsque le moteur du véhicule est à l'arrêt commandé par le système d'arrêt/relance, améliorant ainsi la sécurité d'un tel système, notamment dans le cas où ledit véhicule est équipé d'une boîte de vitesses manuelle.

## Revendications

1. Procédé de gestion des commandes d'arrêt/relance du moteur d'un véhicule automobile exécutée par une unité électronique de commande (3), dans lequel, à partir d'un état d'arrêt commandé par le système d'arrêt/relance dudit moteur dans lequel la pédale d'embrayage et/ou la pédale de frein du véhicule est pressée :
- on détecte, par un capteur approprié équipant ladite pédale, le passage de celle-ci par une première position (A) et par une seconde position (B) distincte de ladite première position,
- on calcule le temps écoulé (Dt) entre les instants de passage de ladite pédale par lesdites première et seconde positions
**caractérisé en ce que** ladite détection par ledit capteur approprié intervient durant sa course de relâchement de sa position extrême pressée à sa position extrême relâchée, et **en ce que**
- on compare ledit temps écoulé (Dt) avec une durée prédéfinie (T) de passage de ladite première à ladite seconde position lors d'une course de pédale considérée comme intentionnelle,
- on déduit, de la comparaison précitée, un signal représentatif du caractère intempestif du relâchement de ladite pédale lorsque ledit temps écoulé (Dt) est inférieur à ladite durée prédéfinie (T), et
- on interdit une relance dudit moteur lorsque le caractère intempestif du relâchement de ladite pédale est indiqué par ledit signal représentatif.

2. Procédé selon la revendication 1, **caractérisé en ce que** lesdites première et seconde positions sont des positions intermédiaires prédéfinies entre la position extrême pressée et la position extrême relâchée de la pédale.

3. Procédé selon la revendication 1, **caractérisé en ce que** l'une desdites première ou seconde positions est la position extrême pressée ou relâchée de la pédale correspondante.

4. Procédé selon la revendication 1, **caractérisé en ce que** lesdites première et seconde positions sont respectivement les positions extrêmes pressée et relâchée de la pédale correspondante.

5. Procédé selon l'une quelconque des revendications 1 à 4, **caractérisé en ce qu'**il est appliqué à un véhicule automobile muni d'un système d'arrêt/relance du moteur comportant au moins une machine électrique tournante réversible (1) et un convertisseur alternatif/continu réversible (2) commandés par une unité électronique dédiée (3), et **en ce que** le calcul dudit temps de passage (Dt) de ladite première à ladite seconde position, sa comparaison avec ladite durée prédéfinie (T) et la génération dudit signal représentatif du caractère intempestif ou non du relâchement de pédale sont effectués par un module de traitement (6) de ladite unité électronique dédiée (3) qui autorise alors ou interdit une relance du moteur du véhicule sur la base dudit signal représentatif.

6. Système d'arrêt/relance du moteur d'un véhicule automobile comprenant des moyens de mettre en oeuvre le procédé selon l'une quelconque des revendications 1 à 5, ledit système comportant au moins une machine électrique tournante réversible (1) et un convertisseur alternatif/continu réversible (2) commandés par une unité électronique dédiée (3) reliée à l'unité centrale de contrôle et de gestion du moteur (4), **caractérisé en ce que** l'unité électronique de commande (3) comporte un module de traitement électronique (6) configuré pour mettre en oeuvre les étapes suivantes :
- calculer le temps (Dt) écoulé entre les instants de passage de la pédale de frein et/ou la pédale d'embrayage du véhicule par une première position (A) et par une seconde position (B) distincte de ladite première position lors de sa course de relâchement entre sa position extrême pressée et sa position extrême relâchée,
- comparer ledit temps écoulé (Dt) avec un temps de référence (T) correspondant au temps de passage de ladite pédale de ladite première à ladite seconde position lors d'une course intentionnelle entre sa position extrême pressée et sa position extrême relâchée,
- déduire, de la comparaison précitée, un signal représentatif du caractère intempestif du relâchement de ladite pédale lorsque ledit temps écoulé (Dt) est inférieur à ladite durée prédéfinie (T),
- transmettre à l'unité électronique de commande (3) un signal représentatif du résultat de ladite comparaison,
et **en ce que** l'unité électronique de commande (3) est apte, sur la base de ce signal représentatif et d'informations fournies par l'unité centrale de contrôle et de gestion du moteur (4), à autoriser ou à interdire une relance du moteur du véhicule.

7. Véhicule automobile équipé d'un système d'arrêt/relance du moteur selon la revendication 6.

## Patentansprüche

1. Verfahren zur Verwaltung der Stopp-Start-Befehle des Motors eines Kraftfahrzeugs, das von einer Steuerelektronik-Einheit (3) ausgeführt wird, wobei ausgehend von einem durch das Stopp-Start-System des Motors gesteuerten Stopp-Zustand, in welchem das Kupplungspedal und/oder das Bremspedal des Fahrzeugs gedrückt sind:
- durch einen geeigneten Sensor, mit dem das Pedal ausgestattet ist, der Durchgang des Letzteren durch eine erste Position (A) und durch eine zweite Position (B), die von der ersten Position verschieden ist, detektiert wird,
- die Zeit (Dt) berechnet wird, die zwischen den Zeitpunkten des Durchgangs des Pedals durch die erste und die zweite Position vergangen ist,
**dadurch gekennzeichnet, dass** die Detektion durch den geeigneten Sensor während seines Freigabeweges von seiner äußersten gedrückten Position zu seiner äußersten freigegebenen Position erfolgt, und dadurch, dass
- die vergangene Zeit (Dt) mit einer vordefinierten Dauer (T) des Durchgangs von der ersten zur zweiten Position bei einem Pedalweg verglichen wird, der als beabsichtigt betrachtet wird,
- aus dem oben genannten Vergleich ein Signal abgeleitet wird, das für den ungewollten Charakter der Freigabe des Pedals repräsentativ ist, wenn die vergangene Zeit (Dt) kürzer als die vordefinierte Dauer (T) ist, und
- ein Wiederanlassen des Motors verhindert wird, wenn der ungewollte Charakter der Freigabe des Pedals durch das repräsentative Signal angezeigt wird.

2. Verfahren nach Anspruch 1, **dadurch gekennzeichnet, dass** die erste und die zweite Position vordefinierte Zwischenpositionen zwischen der äußersten gedrückten Position und der äußersten freigegebenen Position des Pedals sind.

3. Verfahren nach Anspruch 1, **dadurch gekennzeichnet, dass** eine von der ersten und der zweiten Position die äußerste gedrückte Position oder die äußerste freigegebene Position des entsprechenden Pedals ist.

4. Verfahren nach Anspruch 1, **dadurch gekennzeichnet, dass** die erste und die zweite Position die äußerste gedrückte Position bzw. freigegebene Position des entsprechenden Pedals sind.

5. Verfahren nach einem der Ansprüche 1 bis 4, **dadurch gekennzeichnet, dass** es für ein Kraftfahrzeug angewendet wird, das mit einem Stopp-Start-System des Motors ausgestattet ist, das wenigstens eine reversible rotierende elektrische Maschine (1) und einen reversiblen Wechselstrom-Gleichstrom-Wandler (2) umfasst, die von einer speziellen Elektronikeinheit (3) gesteuert werden, und dadurch, dass die Berechnung der Durchgangszeit (Dt) von der ersten zur zweiten Position, ihr Vergleich mit der vordefinierten Dauer (T) und die Erzeugung des Signals, das für den ungewollten oder nicht ungewollten Charakter der Pedalfreigabe repräsentativ ist, von einem Verarbeitungsmodul (6) der speziellen Elektronikeinheit (3) durchgeführt werden, welche dann das Wiederanlassen des Motors des Fahrzeugs auf der Basis des repräsentativen Signals gestattet oder verhindert.

6. Stopp-Start-System des Motors eines Kraftfahrzeugs, welches Mittel zur Durchführung des Verfahrens nach einem der Ansprüche 1 bis 5 umfasst, wobei das System wenigstens eine reversible rotierende elektrische Maschine (1) und einen reversiblen Wechselstrom-Gleichstrom-Wandler (2) umfasst, die von einer speziellen Elektronikeinheit (3) gesteuert werden, die mit der zentralen Steuer- und Verwaltungseinheit des Motors (4) verbunden ist, **dadurch gekennzeichnet, dass** die elektronische Steuereinheit (3) ein elektronisches Verarbeitungsmodul (6) aufweist, das dafür ausgelegt ist, die folgenden Schritte durchzuführen:
- Berechnen der Zeit (Dt), die zwischen den Zeitpunkten des Durchgangs des Bremspedals und/oder des Kupplungspedals des Fahrzeugs durch eine erste Position (A) und durch eine zweite Position (B), die von der ersten Position verschieden ist, während seines Freigabeweges zwischen seiner äußersten gedrückten Position und seiner äußersten freigegebenen Position vergeht,
- Vergleichen der vergangenen Zeit (Dt) mit einer Referenzzeit (T), die der Durchgangszeit des Pedals von der ersten zur zweiten Position bei einem beabsichtigten Weg zwischen seiner äußersten gedrückten Position und seiner äußersten freigegebenen Position entspricht,
- Ableiten, aus dem oben genannten Vergleich, eines Signals, das für den ungewollten Charakter der Freigabe des Pedals repräsentativ ist, wenn die vergangene Zeit (Dt) kürzer als die vordefinierte Dauer (T) ist,
- Übertragen eines Signals, das für das Ergebnis des Vergleichs repräsentativ ist, zu der elektronischen Steuereinheit (3),
und dadurch, dass die elektronische Steuereinheit (3) in der Lage ist, auf der Basis dieses repräsentativen Signals und von Informationen, die von der zentralen Steuer- und Verwaltungseinheit des Motors (4) geliefert werden, ein Wideranlassen des Motors des Fahrzeugs zu gestatten oder zu verhindern.

7. Kraftfahrzeug, welches mit einem Stopp-Start-System des Motors nach Anspruch 6 ausgestattet ist.

## Claims

1. Method for managing commands to stop/restart the engine of a motor vehicle executed by an electronic control unit (3), in which, from a stopped state commanded by the stop/restart system of said engine in which the clutch pedal and/or the brake pedal of the vehicle is pressed:
- there is detected, by an appropriate sensor with which said pedal is equipped, the transition thereof through a first position (A) and through a second position (B) distinct from said first position,
- the elapsed time (Dt) is calculated between the instants of transition of said pedal through said first and second positions
**characterized in that** said detection by said appropriate sensor occurs during its travel of release from its extreme pressed position to its extreme released position, and **in that**
- said elapsed time (Dt) is compared with a predefined time (T) of transition from said first to said second position during a pedal travel considered to be intentional,
- there is deduced, from the abovementioned comparison, a signal representative of the untimely nature of the releasing of said pedal when said elapsed time (Dt) is less than said predetermined time (T), and
- a restarting of said engine is prohibited when the untimely nature of the releasing of said pedal is indicated by said representative signal.

2. Method according to Claim 1, **characterized in that** said first and second positions are predefined intermediate positions between the extreme pressed position and the extreme released position of the pedal.

3. Method according to Claim 1, **characterized in that** one of said first or second positions is the extreme pressed or released position of the corresponding pedal.

4. Method according to Claim 1, **characterized in that** said first and second positions are, respectively, the extreme pressed and released positions of the corresponding pedal.

5. Method according to any one of Claims 1 to 4, **characterized in that** it is applied to a motor vehicle provided with an engine stop/restart system comprising at least one reversible rotating electrical machine (1) and a reversible AC/DC converter (2) controlled by a dedicated electronic unit (3), and **in that** the calculation of said time of transition (Dt) from said first to said second position, the comparison thereof with said predefined time (T) and the generation of said signal representative of the nature, untimely or not, of the pedal release are performed by a processing module (6) of said dedicated electronic unit (3) which then allows or prohibits a restarting of the engine of the vehicle on the basis of said representative signal.

6. System stopping/restarting the engine of a motor vehicle comprising means for implementing the method according to any one of Claims 1 to 5, said system comprising at least one reversible rotating electrical machine (1) and a reversible AC/DC converter (2) controlled by a dedicated electronic unit (3) linked to the central engine control and management unit (4), **characterized in that** the electronic control unit (3) comprises an electronic processing module (6) configured to implement the following steps:
- calculating the elapsed time (Dt) between the instants of transition of the brake pedal and/or the clutch pedal of the vehicle through a first position (A) and through a second position (B) distinct from said first position during its travel of release between its extreme pressed position and its extreme released position,
- comparing said elapsed time (Dt) with a reference time (T) corresponding to the time of transition of said pedal from said first to said second position during an intentional travel between its extreme pressed position and its extreme released position,
- deducing, from the above mentioned comparison, a signal representative of the untimely nature of the releasing of said pedal when said elapsed time (Dt) is less than said predefined time (T),
- transmitting to the electronic control unit (3) a signal representative of the result of said comparison,
and **in that** the electronic control unit (3) is capable, on the basis of this representative signal and of information supplied by the central engine control and management unit (4), to allow or to prohibit a restarting of the engine of the vehicle.

7. Motor vehicle equipped with an engine stop/restart system according to Claim 6.
